# EUROPEAN PATENT APPLICATION

(11) **EP 4 645 068 A1**
(43) Date of publication of application: **05.11.2025**
(21) Application number: 24465519.7
(22) Date of filing: 30.04.2024
(51) Int. Cl.: G06F 8/51, G06F 8/35, G06F 11/36

(54) **METHOD FOR OPERATING A TARGET DEVICE**

(71) Applicant: Siemens S.R.L., 062204 Bucuresti (RO)
(72) Inventor: The designation of the inventor has not yet been filed
(74) Representative: Fierascu, Cosmina-Catrinel

(57) **Abstract**

A method for operating a target device (50, 70) being performed using a generation environment, GE (20), including a computer-implemented Generation Unit, GU, adapted to generate, using at least one Source Programming Language Input program, SL-In program (10), provided to the GE (20), a model in a Destination Programming Language, DL model (21), wherein the DL model (21) is an internal representation of the SL-In program (10), and a Measuring Unit, MU (22), adapted to compare an input value for at least one user-defined observation variable provided to the GE (20) with a corresponding value resulting from an operation of the target device (50, 70); and an execution environment, EE, for operating the target device (50, 70) with an SL program, the EE being communicatively coupled with the GE (20), is provided.

## Description

The present invention relates to a method for operating a target device, the method being performed using a generation environment (GE) and an execution environment (EE).

Nowadays, frameworks, templates and macros are used in the flow of software development to generate software programs based on user-defined intentions, which might be stated in predefined configuration files. Since the complexity of software applications is constantly increasing, also the creation of variants of software applications becomes more and more complex. In particular, starting from a software application comprising a base functionality, it is currently a tedious process to create different versions, also referred to as "flavors", of such software application.

Since software applications comprise a multitude of functionalities that might also influence each other, it would be advantageous to gain insight about different combinations of such functionalities. In other words, it is desirable to measure the productivity of different versions of a designed software application, wherein each version comprises a different combination of functionalities, since this allows e.g. to determine which versions of the respective functionalities fit together best.

Today's procedures for the design of software applications involve manually combining different versions of functionalities by a human being which is cost-intensive, inefficient and often results in an insufficient performance of said software applications since the checked or tested number of possible combinations of functionalities is too small.

Therefore, to overcome the problems mentioned hereinbefore, it is provided an improved method for operating a target device, which allows to automatically generate new application software, thus enabling an improved generation of efficient software application.

### Summary of Invention

According to the invention, it is provided a method for operating a target device. The method is performed using a generation environment (GE) including a computer-implemented Generation Unit (GU) adapted to generate, using at least one Source Programming Language Input program (SL-In program) provided to the GE, a model in a Destination Programming Language (DL model), wherein the DL model is an internal representation of the SL-In program. The GE further includes a Measuring Unit (MU) adapted to compare an input value for at least one user-defined observation variable provided to the GE with a corresponding value resulting from an operation of the target device. The method further uses an execution environment (EE) for operating the target device with an SL program, the EE being communicatively coupled with the GE. The provided method comprises the following steps: Generating, by the GE, at least one SL program variant of the SL-In program provided to the GE using the DL model by modifying at least one code construct of the SL-In program and/or adding at least one code construct to the SL-In program. Providing, to the GE, the input value for the at least one user-defined observation variable, the input value being expected within an operation result resulting from the operation of the target device when operated with the at least one SL program variant. Providing, by the GE, the at least one SL program variant to the EE. Operating, by the EE, the target device with the at least one SL program variant. Measuring, by the GE, whether a user-defined condition is fulfilled by comparing the input value of the at least one user-defined observation variable provided to the GE with the corresponding value of the at least one user-defined observation variable resulting from the operation of the target device.

Such method is particularly advantageous since multiple variants of a software program can be automatically generated in a cost-efficient manner without involvement of a human being. Accordingly, the inventive method represents an automatic way of creating different versions of software applications, wherein the creation is controllable by user-defined conditions.

In other words, an SL-In program is translated into the DL, thereby forming a DL model. Thereafter, the DL model is used to generate one or more derived programs, i.e. SL program variants. Using the DL instead of the SL is advantageous because a DL might have additional capabilities to perform measurements of software. Further, a DL may comprise additional software tools and/or may allow a better randomization in the generation of SL program variants. Simply said, compared to the SL, the DL allows to perform a more comprehensive processing concerning the generation of SL program variants.

Therein, the step of providing the at least one SL-In program to the GE includes importing or reading such program. In particular, the information of the SL-In program may be transferred to the GU of the GE. The SL-In program and/or the SL program variant may be written in a Source Programming Language. Further, the user-defined condition may be related to one or more of safety, energy consumption reliability, standard conformity, interoperability, environment conditions, performance requirements or others. Therein, the inventive method runs an SL program variant and monitors at least one user-defined observation variable by means of which it is checked whether the user-defined condition is fulfilled or not.

The proposed method allows the generation of more SL program variants compared to traditional software development and allows to proceed automatically. Therefore, manual effort for a user is reduced.

The target device may be represented by a physical and/or technical system or a digital model of a physical and/or technical system. In a preferred embodiment, the target device may be an electrical, mechanical and/or pneumatical system and/or any combination thereof. In a preferred embodiment, the target device is a digital model of a System on Chip (SoC), e.g. an industrial application specific integrated circuit (ASIC), an automotive ASIC, a medical ASIC, a digital signal processor (DSP), and/or a DSP ASIC. However, the target device may also be an electronic control unit (ECU). Furthermore, the target device may be a digital model of a car implementing Autonomous Vehicles/Advanced Driver Assistance Systems (AV/ADAS) features as Adaptative cruise control (ACC), Lane Keeping Assist (LKA), Automatic emergency braking (AEB), etc. Moreover preferred, the target device is a system developed with a model-based system (MBS) engineering approach, which may be simulated within a computer-based environment.

According to an embodiment, the internal representation of the SL-In program comprises at least one of code constructs of the SL-In program, a structure of the SL-In program, and variables used in the SL-In program. This allows an identification of sections or portions of the SL-In program when generating the SL program variant. If e.g. the structure of the SL-In program is given, code constructs may be modified more easily. Further, information on used variables allows to optimize the SL-In program in this regard.

Preferably, the method further comprises, if the user-defined condition is not fulfilled, performing the aforementioned steps for at least one new SL program variant, or, if the user-defined condition is fulfilled, storing, by the GE, the corresponding value of the at least one user-defined observation variable resulting from the operation of the target device and ending the method. This allows an efficient software generation since a user-defined condition being fulfilled means that the software or the program does not need to be further improved. On the contrary, the user-defined condition not being fulfilled means that at least one further iteration is necessary, i.e. that at least one further or new SL program variant needs to be generated and an operation result of the same on the target device needs to be measured by comparing such operation result with an intended result.

Preferably, at least two repetitions of the steps of generating at least one SL program variant, operating the target device with the at least one SL program variant, and measuring whether a user-defined condition is fulfilled are performed, respectively. In such an embodiment, GE and EE are adapted to interact with one another during the repetitions being performed and the inventive method being carried out. If, in such an embodiment, it is measured that the values for the at least one user-defined observation variable do not change as desired by a user (i.e. towards expected values), the generating of the at least one SL program variant may be further altered while and/or after the repetitions are performed, in order to adjust the values accordingly.

In a preferred embodiment, the at least one SL program variant is generated based on at least one SL grammar provided to the GE and/or at least one SL syntax provided to the GE. The SL grammar represents a formal description of the SL, which may be used by the GE using the DL model. Further, the SL syntax defines rules and/or elements of the SL. Hence, it is ensured that, even although a DL model is taken into account, specifics of the SL are adhered to.

According to a further preferred embodiment, modifying at least one code construct of the SL-In program and/or adding at least one code construct to the SL-In program is based on at least one of a fixed variable value provided to the GE, a fixed number of to be added code constructs provided to the GE, a constraint-random value for variables provided to the GE, and a constraint-random value of to be added code constructs provided to the GE. In particular, a user may define that, using the DL model, the at least one SL program variant is generated considering fixed values such as a fixed variable value and/or a fixed number of to be added code constructs. By means of this, the number of SL code variants is limited using absolute values. Further, the constraint-random approach in which a constraint-random value for variables and/or a constraint-random value of to be added code constructs is provided to the GE allows to generate a large number of SL program variants with relative ease. In the present case, modifying the at least one code construct also includes that at least parts of the code construct are removed.

Preferably, the SL-In program comprises at least one of an SL-based program and/or an SL-based template. An SL-based program may perform a predefined functionality, whereas an SL-based template may merely serve to represent the overall structure of an SL program without a particular functionality being performed.

Advantageously, the target device is a physical target device or a virtual target device. A physical target device allows measurements to be performed under real conditions, whereas a virtual target device allows measurements to be performed in a virtualized space, thus establishing a simulation environment. For example, a functional model of internal CPUs of a microprocessor is used for simulations and such functional model has the capability to execute the code in a similar way like physically implemented CPUs. The physical target device may be a System on Chip (SoC) or an electronic control unit (ECU).

In a preferred embodiment, the at least one user-defined observation variable comprises at least one of a number of created SL program variants, a number of generated code constructs, a number of parameter values, a number of variables values, and a number of ranges of values of the at least one SL program variant. Based thereon, indications about the generated elements of interest can be obtained. For example, a generation of SL program variants ends when all desired variants have been produced/generated, i.e. a completion level has been reached.

It is further provided a test and operation system for the operation of a target device. The test and operation system comprises a generation environment (GE) including a computer-implemented Generation Unit (GU) adapted to generate, using at least one Source Programming Language Input program (SL-In program) provided to the GE, a model in a Destination Programming Language (DL model). Therein, the DL model is an internal representation of the SL-In program. The GE further comprises a Measuring Unit (MU) adapted to compare an input value for at least one user-defined observation variable provided to the GE with a corresponding value resulting from an operation of the target device. Moreover, the test and operation system comprises an execution environment (EE) for operating the target device with an SL program, the EE being communicatively coupled with the GE, and means adapted to execute the steps of the provided method as defined above, using the GE and the EE. With such test and operation system, the advantages mentioned hereinbefore for the proposed method may advantageously be realized also for the test and operation system.

In the present case, the GE may also be referred to as a generation entity, a generation software, a generation application or the like. Further, the EE may also be referred to as an execution entity, an execution software, an execution application or the like.

Furthermore, it is provided a computer program product comprising instructions to cause the test and operation system defined hereinbefore to execute the steps of the provided method as described above, using the GE and the EE. With such computer program product, the advantages mentioned hereinbefore for the proposed method may advantageously be realized also for said computer program product.

Moreover, a computer-readable medium is provided, having stored thereon the provided computer program product defined above. With such computer-readable medium, the advantages mentioned hereinbefore for the proposed method may advantageously be realized also for said computer-readable medium.

Preferably, a feedback loop may be used such that results of a previous SL program variant influence the generation of a new SL program variant. Thereby, for example, unexpected results may be investigated. Said influence may be executed by new user-defined conditions/constraints.

Moreover, according to a preferred embodiment, while executing the feedback loop, a step of computing new user-defined condition/constraints is executed.

Advantageously, the step of generating the at least one SL program variant is executed independently of the SL-In program. Once the SL-In program is imported, the generation may be performed independently of the SL-In program. A constant connection to an entity providing the SL-In program is not required.

According to another preferred embodiment, the DL model comprises source code constructs which the source code of the SL-In program does not support. Thereby, the SL program variant may show a behavior different from the SL-In program but suitable for testing particular aspects of the target device and/or for achieving a higher completion level in one iteration of running an SL program variant.

Preferably, the generation environment, using the DL model, is configured to measure variations of the results of an SL program variant. Such variations may refer to the distance of two results obtained after execution of one SL program variant.

According to another embodiment, the SL-In program includes code for at least one of functional testing, validation, integration testing, performance testing, security feature testing and compatibility testing.

Brief Description of Figures
- Fig. 1: is a schematic view of functional blocks representing entities being used in the inventive method according to a first embodiment;
- Fig. 2: is a schematic view of functional blocks representing entities being used in the inventive method according to a second embodiment;
- Fig. 3: is a flowchart of the inventive method for operating a target device;
- Fig. 4: is a schematic view of a computer program product according to the present disclosure; and
- Fig. 5: is a schematic view of a computer-readable medium according to the present disclosure.

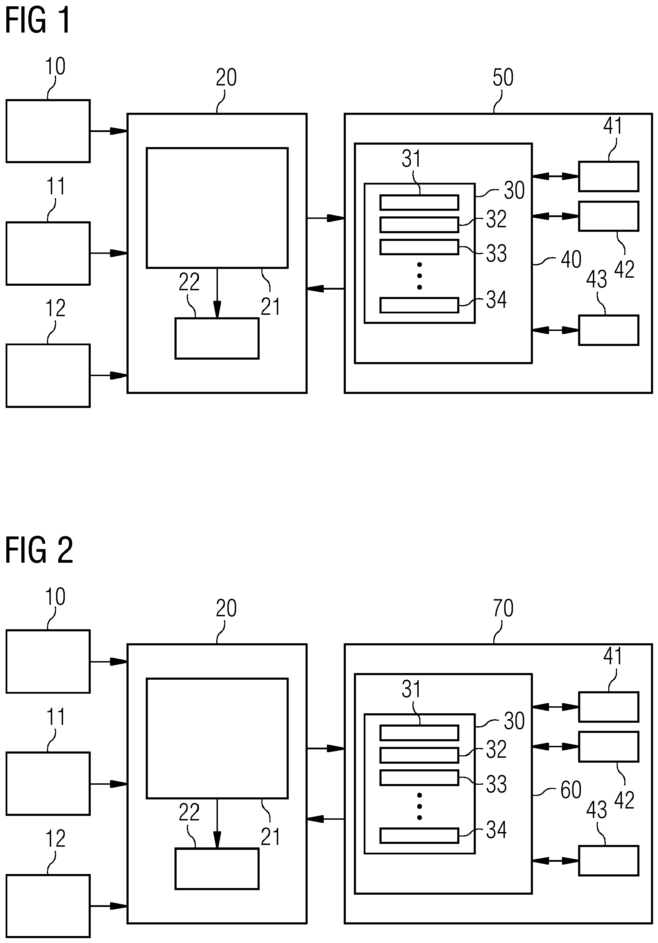

Fig. 1 is a schematic view of functional blocks representing entities being used in the inventive method according to a first embodiment. The proposed method involves multiple entities that can be grouped into, considering their main functionalities, one of the following categories:

Firstly, a generation environment (GE) 20 is given, which may be considered to represent a translation mechanism that maps source language (SL) structures of an SL-In program 10 into a destination language (DL). The source language may also be referred to as a Source Programming Language, whereas the destination language may also be referred to as a Destination Programming Language. An SL grammar and/or SL syntax 11, that is, the formal language description, may be processed by the generation environment 20. Based on this, language constructs, for example syntax elements and/or language-based components, may be extracted from the SL-In program 10. The syntax elements may be translated into DL statements and/or into corresponding hierarchical objects of the DL model 21. In detail, after reading the SL grammar and/or SL syntax 11 and creating a DL model 21, the used statements of the SL-In program 10 may be extracted and the DL model 21 may be updated. In other words, the DL model 21 is customized according to the SL-In program 10, which is based on SL. Further functions of the generation environment 20 are one or more of: providing functionalities to constrain a generation of SL program variants 30; providing functionalities to create such SL program variants 30 like a constraint-randomized generation or a linear variation or an exponential variation; providing functionalities to evaluate the production of generated derived programs; and store the measurements results. An SL program variant 30 may also be referred to as a derived program or simply as a variant.

Secondly, the user-defined condition 12 being input to the GE 20 will be described. The user-defined condition 12 may define criteria, like operational limits for the SL-In program 10 and/or requirements for a coverage of results to be achieved by at least one SL program variant 30. At least one user-defined observation variable may be used to define the user-defined condition 12. Whether such user-defined condition 12 is fulfilled is measured by comparing an input value of the at least one user-defined observation variable with the corresponding value of the at least one user-defined observation variable resulting from the operation of the target device 50, 70, which is operated with the at least one SL program variant 30. In the present case, numeral 30 may refer to at least one of the exemplary SL program variants 31 to 34, but may also refer to a much larger number of derived programs, which may be greater than 100, preferably greater than 1000, more preferably greater than 10000.

Optionally, a completion level may be defined. For example, the completion level may stipulate that 1%, preferably 50, more preferably 10%, even more preferably 20%, most preferably 50% of all desired results are covered by the method, i.e. in the generation of SL program variants. The completion level may depend on the complexity of the target device 50, 70. For a rather complex target device 50, 70, the completion level may be rather low. On the contrary, the completion level for a rather simple target device 50, 70 may be rather high. For example, the complexity may be rated by the number of testing hours for the target device 50, 70 in relation to the completion level.

Thirdly, the target device will be described. The at least one SL program variant 30 may be executed on various target devices 50, 70. In this regard, Fig. 1 relates to a first embodiment comprising a physical target device 50. In particular, the physical target device 50 may be a System on Chip (SoC). A SoC may be an integrated circuit incorporating one or more CPU cores. Physical target devices 50 are electronic devices, which incorporate one or more processing units 40 (e.g. a central processing unit, CPU). A physical device may be, for instance: a microcontroller, a microprocessor, a digital signal processor or any other type of SoC.

Alternatively, the target device may be a virtual target device 70, as shown in Fig. 2 according to a second embodiment. The first and the second embodiment only differ in the type of the target device. That is, in Fig. 2, the target device is a virtual target device 70. The virtual target device 70 may be a digital representation of a part or a complete physical device. The purpose of a virtual target device 70 is to perform an analysis (for example, for correctness, completeness, performance, etc.) using a simulation. For example, in the process of a SoC design, digital representations of the internal functionalities (internal modules 41, 42, 43, internal connections, CPUs, etc.) are used in simulations to verify a future SoC functionality. In many cases, a functional model of the internal CPUs may be used for simulations and this functional model has the capability to execute the code in a similar way like a physically implemented CPU.

Both embodiments have in common that the target device 50, 70 may execute a program written in the source language (SL). In other words, a target device 50, 70 may be able to execute the SL-In program 10 directly. However, according to the present disclosure, the derived program 30 is also written in the source language. Accordingly, the target device 50, 70 may execute the at least one SL program variant 30. The SL-In program 10 and the at least one SL program variant 30 are different from each other. Optionally, all SL program variants 31 to 34 are different from each other.

Due to the functional differences of the SL-In program 10 and the at least one SL program variant 30, testing of the target device 50, 70 is more reliable compared to testing the SL-In program 10 only. The main purpose of the at least one SL program variant 30 is to create variations of an SL-In program 10, that is, a software program. Thereby, a broad range of parameters (values within the program, structures within the program, etc.) may be covered. The at least one SL program variant 30, for example, a first derived program 31, a second derived program 32, a third derived program 33 and a fourth derived program 34, are then executed on the target device 50, 70, that is, on the CPU 50 of the SoC 40 or the core 60 on the electronic control unit (ECU). Thereby, the functionality of the target device 50, 70 may be verified.

In other words, verification may check the results of the functional testing of the target device by the derived programs, or for other analysis, such as one or more of performance analysis, estimated power consumption analysis, correct integration of the internal modules analysis (in other words, for system integration testing), throughput analysis, security analysis, compatibility analysis, etc.

The target device 50, 70 may further comprise modules 41, 42, 43 with additional functionality. As indicated above, it is measured whether a user-defined condition 12 by evaluating at least one user-defined observation variable, wherein such at least one user-defined observation variable may be related to modules 41, 42, 43. Accordingly, the functionality of said modules 41, 42, 43 may be covered by the at least one SL program variant 30. In other words, the modules 41, 42, 43 are used by the SL program variant 30. The modules 41, 42, 43 may be physical devices. Alternatively, the modules 41, 42, 43 may be components of a superordinate physical device.

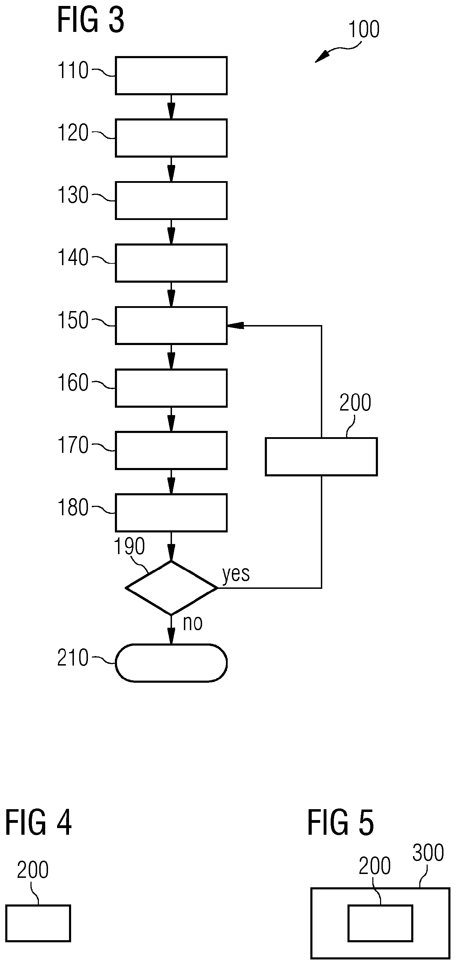

Fig. 3 is a flowchart of the inventive method for operating a target device 50, 70. According to an embodiment of the method of the present disclosure, wherein the above descriptions apply accordingly, the computer-implemented method 100 of generating derived programs 30 comprises the following main steps:
In a first step 110, the SL-In program 10 is imported into the generation environment 20. The SL-In program 10 may be written in a source language (SL). The SL-In program 10 may comprise code for at least one of functional testing, validation, integration testing, performance testing, security feature testing and compatibility testing. The step of importing 110 may comprise analyzing a source code of the SL-In program 10 and constructing a DL model 21 thereof. The DL model 21 may comprise source code constructs of the SL-In program 10 in a destination language (DL) being different from the source language (SL), wherein the DL model 21 may be used to execute the generating step 150. The source code constructs may be modified and/or augmented by additional source code constructs. Modifying and/or augmenting may comprise at least one of changing fixed values, using variables for fixed values, using constraint-random values, using random values and removing source code constructs. Optionally, the DL model 21 may provide source code constructs, which the source code of the SL-In program 10 does not support. Further optionally, the DL model 21 may measure variations of the results of a derived program 30.

In a subsequent step 120, a user-defined condition 12 may be created and provided to the generation environment 20. The user-defined condition 12 may comprise constraints regarding the SL-In program 10. In particular, the user-defined condition 12 may specify an intended behavior of the target device 50, 70. Optionally, the target device 50, 70 may be a physical target device 50 or a virtual target device 70. Accordingly, results after executing a derived program 30 on the target device 50, 70 may be evaluated by comparison with said user-defined condition 12. In particular, it is measured whether a user-defined condition 12 is fulfilled by comparing the input value of at least one user-defined observation variable with the corresponding value of the at least one user-defined observation variable resulting from the operation of the target device 50, 70 using the SL program variant 30. Alternatively, a standard configuration, like a pre-defined condition may be used. The user-defined condition 12 may further comprise intentions and/or constraints and/or criteria for the generated at least one SL program variant 30. A criterion of the user-defined condition 12 may be reaching a completion level.

In a subsequent step 130, the user-defined condition 12 may also be converted and/or stored into the DL model 21 in the generation environment 20.

In a subsequent step 140, measurement intentions may be specified and/or measuring points may be attached to corresponding structures of interest in the DL model 21. In other words, the steps 120, 130 and 140 may be referred to as providing a user-defined condition 12 comprising constraints regarding the SL-In program 10 to the generation environment 20.

In a subsequent step 150, the derived program 30, that is, for example, the first derived program 31, is generated by the generation environment 20 from the SL-In program 10, applying at least one of said constraints. Optionally, the step of generating 150 is executed independently of the SL-In program 10. For said generation, the DL model 21 is used. The user-defined condition 12 may comprise defined intentions and/or constraints, which may be defined by a user.

In a subsequent step 160, the derived program, that is, in a first iteration the first derived program 31, is executed on the target device 50, 70, thereby producing operation results. The results may be measured by using observation points, also referred to as user-defined observation variables, which may be implemented in the DL model 21. In other words, step 160 refers to executing a generated derived program on the target device 50, 70.

Thereafter, in step 170 the results of the execution are evaluated. In detail, the production of the derived program 30 may be measured by using the user-defined observation variables implemented in the DL model 21. Optionally SL program variants 30 may be ranked based on user-defined observation variables. For example, evidence may be provided that a certain range of testing stimulus was generated - stimulus that can target certain device requirements, areas etc. (coverage metrics). Alternatively, a list may be provided, created based on the user defined selection criteria, which may be computed based on a comparison of a targeted performance, security, etc.

In a step 180, the results of the executed at least one SL program variant 30 are evaluated as internal measurements and it may be decided (step 190) if a new iteration must be executed. Steps 170 and 180 may together be referred to as evaluating or measuring said results of the first derived program by the generation unit. The steps 150, 160, 170 and 180 may belong to a feedback loop. The feedback loop may be as follows. The derived program is executed and internal measurements may be evaluated (step 170).

Subsequently, in step 190, it may be decided if a new iteration of creating a new derived program must be executed. Depending on the purpose of the derived program, the feedback loop may be a reactive feedback loop which actively uses execution results to compute restrictions (step 200) within the user-defined condition 12 to be applied in subsequent derived program generation loops. Alternatively, the feedback loop may be a passive feedback loop which only measures and/or quantifies the results of executing the generated at least one SL program variant 30 on the target device. In both cases, the internal measurements may cause either the generation of a new derived program (by returning to step 150), or end/stop the generation at step 210. Internal measurements may refer to a comparison of the results obtained in step 160 and the user-defined condition 12. Subsequently, results may be saved and/or the measurement results may be provided for analysis.

By way of the method as explained above, the method 100 may automatically create at least one SL program variant 30, which may be referred to as a derived version of an SL-In program 10. The behavior and functionality of the SL-In program 10, which may be written in a source language, may be modeled in another language, i.e. the destination language, by the generation environment 20. The source language and the destination language are decoupled from each other. Accordingly, there is a high degree of freedom for the source language of the at least one SL program variant 30 generated based on the destination language.

The proposed method 100 allows automatic generation of multiple SL program variants 30, each with different behavior and/or different functionality. Optionally, one or more SL-In programs 10 may be used. By using randomization with a user-defined condition 12 and/or constraints, the user can control the number SL program variants 30. In particular, the generation step 150 of newly generated at least one SL program variant 30 may be constrained and a space of generated derived program 30 may be measured. Such derived programs space may mean that every derived program, which is based on at least partially different user-defined condition 12 and/or constraints, forms a space which is covered when said generated program is executed. The sum of multiple of such spaces may be referred to as a derived programs space.

Fig. 4 is a schematic view of a computer program product according to the present disclosure. According to this embodiment, a computer program product 300 comprises instructions to execute the computer-implemented method 100 of generating derived programs as described above.

Fig. 5 is a schematic view of a computer-readable medium according to the present disclosure. According to this embodiment, a computer-readable medium 400 has stored thereon the computer program product 300 mentioned above.

### References List

- 10: SL-In program
- 11: SL grammar and/or SL syntax
- 12: user-defined condition
- 20: generation environment
- 21: DL model
- 22: measuring unit
- 30-34: SL program variant
- 40: processing unit
- 41-43: internal module
- 50: target device (physical)
- 60: core
- 70: target device (virtual)
- 100: method
- 110-210: method step
- 300: computer program product
- 400: computer-readable medium

## Claims

1. Method for operating a target device (50, 70), the method being performed using
a generation environment, GE (20), including
a computer-implemented Generation Unit, GU, adapted to generate, using at least one Source Programming Language Input program, SL-In program (10), provided to the GE (20), a model in a Destination Programming Language, DL model (21), wherein the DL model (21) is an internal representation of the SL-In program (10), and
a Measuring Unit, MU (22), adapted to compare an input value for at least one user-defined observation variable provided to the GE (20) with a corresponding value resulting from an operation of the target device (50, 70); and
an execution environment, EE, for operating the target device (50, 70) with an SL program, the EE being communicatively coupled with the GE (20),
the method comprising the steps of:
a) generating, by the GE (20), at least one SL program variant (30) of the SL-In program (10) provided to the GE (20) using the DL model (21) by modifying at least one code construct of the SL-In program (10) and/or adding at least one code construct to the SL-In program (10),
b) providing, to the GE (20), the input value for the at least one user-defined observation variable, the input value being expected within an operation result resulting from the operation of the target device (50, 70) when operated with the at least one SL program variant (30),
c) providing, by the GE (20), the at least one SL program variant (30) to the EE,
d) operating, by the EE, the target device (50, 70) with the at least one SL program variant (30),
e) measuring, by the GE (20), whether a user-defined condition (12) is fulfilled by comparing the input value of the at least one user-defined observation variable provided to the GE (20) with the corresponding value of the at least one user-defined observation variable resulting from the operation of the target device (50, 70).

2. The method of claim 1, wherein the internal representation of the SL-In program (10) comprises at least one of code constructs of the SL-In program (10), a structure of the SL-In program (10), and variables used in the SL-In program (10) .

3. The method of one of the previous claims, further comprising:
fl) if the user-defined condition (12) is not fulfilled, performing steps a) to e) for at least one new SL program variant,
f2) if the user-defined condition (12) is fulfilled, storing, by the GE (20), the corresponding value of the at least one user-defined observation variable resulting from the operation of the target device (50, 70) and ending the method.

4. The method of one of the previous claims, wherein the at least one SL program variant (30) is generated based on at least one SL grammar (11) provided to the GE (20) and/or at least one SL syntax (11) provided to the GE (20).

5. The method of one of the previous claims, wherein modifying at least one code construct of the SL-In program (10) and/or adding at least one code construct to the SL-In program (10) is based on at least one of a fixed variable value provided to the GE (20), a fixed number of to be added code constructs provided to the GE (20), a constraint-random value for variables provided to the GE (20), and a constraint-random value of to be added code constructs provided to the GE (20).

6. The method of one of the previous claims, wherein the SL-In program (10) comprises at least one of an SL-based program and/or an SL-based template.

7. The method of one of the previous claims, wherein the target device (50, 70) is a physical target device (50, 70) or a virtual target device (50, 70).

8. The method of claim 7, wherein the physical target device (50, 70) is a system on chip, SOC, or an electronic control unit, ECU.

9. The method of one of the previous claims, wherein the at least one user-defined observation variable comprises at least one of a number of created SL program variants, a number of generated code constructs, a number of parameter values, a number of variables values, and a number of ranges of values of the at least one SL program variant (30).

10. A test and operation system for the operation of a target device (50, 70), the test and operation system comprising:
a generation environment, GE (20), including
a computer-implemented Generation Unit, GU, adapted to generate, using at least one Source Programming Language Input program, SL-In program (10), provided to the GE (20), a model in a Destination Programming Language, DL model (21), wherein the DL model (21) is an internal representation of the SL-in program, and
a Measuring Unit, MU (22), adapted to compare an input value for at least one user-defined observation variable provided to the GE (20) with a corresponding value resulting from an operation of the target device (50, 70);
an execution environment, EE, for operating the target device (50, 70) with an SL program, the EE being communicatively coupled with the GE (20); and
means adapted to execute the steps of the method according to one of the claims 1 to 10, using the GE (20) and the EE.

11. A computer program product (300) comprising instructions to cause the test and operation system of claim 10 to execute the steps of the method of one of the claims 1 to 9, using the GE (20) and the EE.

12. A computer-readable medium (400) having stored thereon the computer program product 300 of claim 11.
